**Europäisches Patentamt**

**European Patent Office**

**Office européen des brevets**

(19)

(11) Veröffentlichungsnummer : **0 436 587 B1**

# (12) EUROPÄISCHE PATENTSCHRIFT

(45) Veröffentlichungstag der Patentschrift :
**02.12.92 Patentblatt 92/49**

(51) Int. Cl.$^5$ : **B60T 8/66**

(21) Anmeldenummer : **89910610.8**

(22) Anmeldetag : **20.09.89**

(86) Internationale Anmeldenummer :
**PCT/EP89/01089**

(87) Internationale Veröffentlichungsnummer :
**WO 90/03291 05.04.90 Gazette 90/08**

(54) **ANTIBLOCKIERREGELSYSTEM.**

(30) Priorität : **30.09.88 DE 3833212**

(43) Veröffentlichungstag der Anmeldung :
**17.07.91 Patentblatt 91/29**

(45) Bekanntmachung des Hinweises auf die
Patenterteilung :
**02.12.92 Patentblatt 92/49**

(84) Benannte Vertragsstaaten :
**DE FR GB IT SE**

(56) Entgegenhaltungen :
**EP-A- 128 583**
**EP-A- 196 753**
**EP-A- 299 510**
**WO-A-88/03490**
**WO-A-88/07456**
**DE-A- 3 011 541**
**DE-A- 3 638 837**
**GB-A- 2 188 996**

(73) Patentinhaber : **ROBERT BOSCH GMBH**
**Postfach 30 02 20**
**W-7000 Stuttgart 30 (DE)**

(72) Erfinder : **LEIBBRAND, Norbert**
**Berliner Ring 65**
**W-7130 Mühlacker (DE)**
Erfinder : **WIEDER, Gerhard**
**Sachsenheimer Weg 15**
**W-7122 Besigheim (DE)**

(74) Vertreter : **Kammer, Arno, Dipl.-Ing. et al**
**ROBERT BOSCH GmbH Zentralabteilung**
**Patente Postfach 30 02 20**
**W-7000 Stuttgart 30 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Stand der Technik

Es sind Antiblockierregelsysteme bekannt, die eine Schlupfregelung aufweisen und hierzu eine der Fahrzeuggeschwindigkeit annähernde Referenzgröße bilden, deren Steigung begrenzt ist, um nicht physikalisch unmögliche Fahrzeug geschwindigkeitsänderungen in die Referenzgrößenbildung eingehen zu lassen.

Aus der EP-A2-0299 510 ist ein Antiblockierregelsystem bekannt, bei dem die Fahrzeuggeschwindigkeit außerhalb des Regelbetriebs durch die Geschwindigkeit des schneller drehenden, nicht angetriebenen Rads bestimmt wird.

In der DE-A1-30 11 541 ist eine Anordnung zur Erfassung des Schleuderns oder Gleitens der Räder von laufachsenlosen Schienentriebfahrzeugen beschrieben. Die Drehzahlen der angetriebenen Achsen werden hier ermittelt und mittels eines Integrators wird eine Pseudolaufachse nachgebildet; das Signal des Integrators dient als Referenzgröße.

Vorteile der Erfindung

Bei der Erfindung geht es demgegenüber um die Referenzgrößenbildung außerhalb der Regelung und bei einem ABS, bei dem nur der Bremsdruck an den angetriebenen Rädern geregelt wird; es werden folgende Vorteile erreicht: Wenn beide Räder durchdrehen, geht die Referenzgröße nur im Rahmen des physikalisch Möglichen hoch -schnelle Hochzieher sind ausgeschlossen. Wenn ein Rad durchdreht, so bestimmt das langsamere Rad die Referenzgröße. Bricht ein Rad schleichend ein, wie dies bei sog. μ-split-Bedingungen auftritt, so hält das schnellere Rad die Referenzgröße oben und sorgt dafür, daß die Schlupfregelung anläuft. Die Referenzgröße kann nicht "abseilen".

Es wird außerdem eine Geschwindigkeitsdifferenz $V_D$ vorgegeben. Unterscheiden sich beide Radgeschwindigkeiten um mehr als diese Differenz (Band), so wird der Zustand, der beim Verlassen des Bands vorhanden war, beibehalten, bis sich wieder beide Radgeschwindigkeiten angenähert haben.

Die obigen Ausführungen zeigen, daß bei der Erfindung großer Wert auf die Referenzgrößenbildung außerhalb der Regelung gelegt wird. Hier wird die Referenzgröße in anderer Weise als während der Antiblockierregelung gebildet. Dort werden höhere Steigungen zugelassen, um der höheren Raddynamik gerecht zu werden. Die Referenzbildung während der Regelung ist z.B. folgendermaßen: nach Auftreten der Instabilität (-b) wird zuerst für eine Zeit die Steigung flach gehalten, jedoch wird danach eine große Steigung sowohl für Geschwindigkeitsabnahme als auch für die Geschwindigkeitszunahme zugelassen.

Ein wichtiger Aspekt der Erfindung ist, die Referenzbildung nach den während der Regelung angewandten Kriterien auf diesen Zeitraum der Regelung zu beschränken, ohne das Anregelverhalten zu verschlechtern.

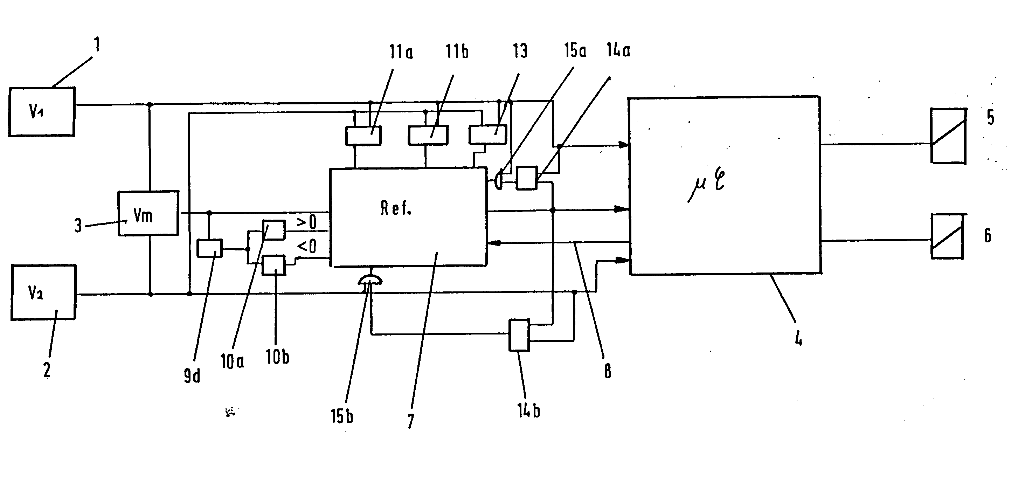

Anhand der Zeichnung wird ein Ausführungsbeispiel der Erfindung näher erläutert. In der Zeichnung sind den beiden angetriebenen Rädern z.B. eines LKW Sensoren 1 und 2 zur Bestimmung der Radgeschwindigkeit zugeordnet. Aus den beiden Radgeschwindigkeitssignalen wird in einem Block 3 der Mittelwert

$$Vm = \frac{V_1 + V_2}{2}$$

gebildet. Die Radgeschwindigkeitssignale werden auch einem Mikroprozessor 4 zugeführt, der Schlupfsignale, aber z.B. auch Radverzögerungssignale bildet, und in Abhängigkeit vom Bewegungsverhalten der Räder Bremsdrucksteuersignale für die den Rädern zugeordneten Bremsdrucksteuerventile 5 und 6 bildet.

Zur Bildung von Schlupfsignalen wird eine dem Verlauf der Fahrzeuggeschwindigkeit angenäherte Referenzgröße benötigt. Diese Bildung wird in einem Block 7 vorgenommen.

Wie bereits erwähnt, erfolgt die Referenzgrößenbildung unterschiedlich in Abhängigkeit davon, ob die Bremsdruckregelung angelaufen ist (eine Bremsdruckabsenkung erfolgt ist) oder nicht. Dies wird dem Block 7 über eine Leitung 8 vom Mikroprozessor 4 mitgeteilt. Solange die Regelung noch nicht eingesetzt hat, werden die positiven Steigungen der Referenzgröße durch die mittlere Radgeschwindigkeit Vm bestimmt, wozu dem Block 7 das Geschwindigkeitssignal Vm zugeführt wird. Der Block 7 enthält eine Begrenzung für die Referenzsteigung: Nimmt die Steigung einen Wert an, der bei dem Fahrzeug als physikalisch unmöglich anzusehen ist, so wird der Wert auf den möglichen Wert begrenzt. Verschiedene Geschwindigkeitsbereiche können verschiedene maximale Steigungen, zu denen das Fahrzeug bei maximaler Beschleunigung fähig ist, zugeordnet sein. Diese Begrenzung wird bei Durchdrehen beider Räder wirksam. Andererseits wird, wenn nur ein Rad ausbricht jeweils die Größe der Bezugsgröße durch ein Radgeschwindigkeitssignal bestimmt und zwar durch das des langsamer drehenden Rads, wenn dVm/dt > 0 ist (also bei Fahrzeugbeschleunigung und Druchdrehen eines Rads) und durch das des schneller drehenden Rads, wenn dVm/dt < 0 (Abseilen eines Rads) ist. Hierzu wird das Signal Vm in einem Differenzierer 9α differenziert und sein Ausgangssignal über Schwellwertstufen 10a und 10b (> 0; < 0) dem block 7 augeführt. Außerdem wird in einem Block 11a das größere und in einem Block 11b das kleinere der beiden Rafgeschwindigkeitssignale ausgewählt und dem Block 7 zugeführt, damit dort eines dieser Signale zur Stützung der Referenzgröße benutzt werden kann.

Von einem weiteren Block 13 wird ein Signal erzeugt, wenn die Signale $V_1$ und $V_2$ um einen vorgegebenen Wert $V_D$ (Schwelle) auseinander liegen. Tritt dies auf, so bleibt der gerade vorhandene Zustand (das schnellere oder das langsamere Rad stützt) erhalten, bis die Schwelle wieder unterschritten ist bzw. die Regelung einsetzt.

Wird dagegen über die Leitung 8 gemeldet, daß die Regelung eingesetzt hat, so wird die Referenz, wie oben erläutert, gebildet.

Liegt bei Regelungsbeginn ein Radsignal um mehr als ein vorgegebener Wert über der Referenzgröße, so wird dies in einem der Vergleicher 14a oder 14b festgestellt. Deren Ausgangssignal sperrt dann über ein Und-Gatter 15a oder 15b die Zufuhr des Signals zum Block 7, und verhindert somit daß dieses Signal in die Referenzgrößenbildung eingeht.

## Patentansprüche

1. Antiblockierregelsystem für die beiden angetriebenen Räder eines Fahrzeugs, bei dem nur der Bremsdruck der zwei angetriebenen Räder geregelt wird, bei dem der Radschlupf ermittelt und zur Regelung ausgenützt wird, wozu aus den in vorgegebenen Zeitabständen ermittelten Radgeschwindigkeiten eine dem Verlauf der Fahrzeuggeschwindigkeit angenäherte Referenzgröße gebildet wird, mit der Radgeschwindigkeitssignale zur Schlupfmessung verglichen werden, wobei bei der Referenzgrößenbildung die Steigungen des Verlaufs auf einen maximal möglichen Wert begrenzt werden, wobei außerhalb der Bremsdruckregelung die Größe der Referenzgröße jeweils durch nur eine der Radgeschwindigkeiten bestimmt wird, dadurch gekennzeichnet, daß

   a1) sowohl bei einer Steigung dVm/dt größer 0 als auch wenn und solange die Räder (nach Auftreten von dVm/dt größer 0) eine Geschwindigkeitsdifferenz $v_D$ aufweisen, das Radgeschwindigkeitssignal des langsameren, angetriebenen Rads und
   a2) sowohl bei einer Steigung dVm/dt kleiner 0 als auch wenn und solange die Räder (nach Auftreten von dVm/dt kleiner 0) eine Geschwindigkeitsdifferenz $v_D$ aufweisen oder bis die Bremsdruckregelung einsetzt, das Radgeschwindigkeitssignal des schnelleren, angetriebenen Rads die Referenzgröße bestimmt ($v_m$ ist die gemittelte Radgeschwindigkeit der beiden Räder) und
   b) die positive Steigung der Referenzgröße durch die Steigung des Mittelwerts $V_m$ bestimmt wird und diese entsprechend der maximal möglichen Beschleunigung begrenzt wird.

2. Antiblockierregelsystem nach Anspruch 1, dadurch gekennzeichnet, daß die maximale positive Steigung geschwindigkeitsabhängig veränderbar, insbesondere bereichsweise, umschaltbar ist.

## Claims

1. Anti-lock brake system for the two driven wheels of a vehicle in which only the brake pressure of the two driven wheels is subject to closed-loop control, in which the wheel slip is determined and used for closed-loop control, for which a reference parameter approximating to the curve of the vehicle speed is formed from the wheel speeds determined at specified time intervals, the wheel speed signals being compared with the reference parameter in order to measure slip, the slopes of the curve being limited to a maximum possible value in the formation of the reference parameter and the magnitude of the reference parameter being determined, when the brake pressure closed-loop control is not in operation, by means of only one of the wheel speeds in each case, characterised in that

   a1) both in the case of a slope dVm/dt greater than 0 and when and as long as the wheels (after occurrence of dVm/dt greater than 0) exhibit a speed difference $v_D$, the wheel speed signal of the slower driven wheel determines the reference parameter ($v_m$ is the average of the wheel speed of both wheels) and
   a2) both in the case of a slope dVm/dt smaller than 0 and when and as long as the wheels (after occurrence of dVm/dt smaller than 0) exhibit a speed difference $v_D$ or until the brake pressure closed-loop control comes into operation, the wheel speed signal of the faster driven wheel determines the reference parameter ($v_m$ is the average of the wheel speed of both wheels) and
   b) the positive slope of the reference parameter is determined by the slope of the average $V_m$ and this is limited to correspond with the maximum possible acceleration.

2. Anti-lock brake system according to Claim 1, characterised in that the maximum positive slope can be switched so that it varies as a function of speed, in particular by ranges.

## Revendications

1. Système de réglage anti-blocage pour les deux roues entraînées d'un véhicule, système dans lequel seul la pression de freinage des deux roues entraînées est resté réglé, dans lequel le patinage de la roue est déterminé et utilisé pour la régulation, c'est pourquoi à partir des vitesses se roues déterminées à des intervalles de temps prédéfinis, une grandeur de référence approchée de l'évolution de la vitesse du véhicule est formée, avec laquelle les signaux de vitesse de roues sont comparés pour mesurer le patinage, tandis que lors de la formation de la grandeur de référence, les pentes de l'évolution sont limitées à une valeur maximale possible, et tandis qu'en dehors de la régulation de la pression de freinage la grandeur de la grandeur de référence est déterminée respectivement par seulement une des vitesses de roues,

système caractérisé en ce que :

a1) aussi bien pour une pente dVm/dt supérieure à 0 qu'également lorsque et aussi longtemps que les roues (après l'apparition de dVm/dt supérieur à 0) ont une différence de vitesse $V_D$, le signal de vitesse de la roue entraînée la plus lente détermine la grandeur de référence,

a2) aussi bien lors d'une pente dVm/dt plus petite que 0 comme également lorsque et aussi longtemps que les roues (après l'apparition de dVm/dt plus petit que 0) ont une différence de vitesse $V_D$ ou bien jusqu'à ce que la régulation de la pression de freinage soit mise en oeuvre, le signal de vitesse de la roue entraînées la plus rapide détermine la grandeur de référence (Vm et la vitesse pondérée des deux roues).

b) la pente positive de la grandeur de référence est déterminée par la pente de la valeur pondérée $V_m$ et celle-ci est limitée de façon correspondante à l'accélération maximale possible.

2. Système de réglage anti-blocage selon la revendication 1, caractérisé en ce que la pente positive maximale est susceptible d'être commutée en étant modifiée en fonction de la vitesse, notamment par zone.